# EUROPEAN PATENT SPECIFICATION

(11) **EP 4 548 760 B1**
(45) Date of publication and mention of the grant of the patent: **08.10.2025**
(21) Application number: 23866676.2
(22) Date of filing: 12.09.2023
(51) Int. Cl.: A01M 1/02, A01M 1/06, A01M 1/08

(54) **MOSQUITO TRAP**
MOSKITOFALLE
PIÈGE À MOUSTIQUES

(30) Priority: 18.08.2023 CN 202322241226 U
(43) Date of publication of application: 07.05.2025
(73) Proprietor: Foshan GreenYellow Electric Technology Co., Ltd., Foshan, Guangdong 528300 (CN)
(72) Inventor: WANG, Ruofei, Foshan, Guangdong 528300 (CN); QIN, Xinzong, Foshan, Guangdong 528300 (CN); WEN, Shanheng, Foshan, Guangdong 528300 (CN)
(74) Representative: Bayramoglu et al.
(86) International application number: PCT/CN2023/118222
(87) International publication number: WO 2025/039303

(56) References cited:
- WO-A1-2014/077932
- WO-A1-2019/221014
- CN-A- 108 552 129
- CN-A- 110 839 606
- CN-U- 209 218 991
- CN-U- 209 403 366
- CN-U- 211 631 465
- KR-A- 20180 054 140
- US-A1- 2017 258 068
- US-B2- 11 116 198

## Description

### TECHNICAL FIELD

The present disclosure relates to the field of mosquito trapping apparatuses, and in particular to a mosquito trapping device.

### BACKGROUND

Mosquito trapping machines are also called mosquito trapping devices, mosquito control machines, ecological mosquito trapping machines, ecological mosquito control machines, ecological mosquito control systems. The mosquito trapping machines originated in the United States in the 1990s and have been gradually popularized in the Chinese market since 2003. Such premium mosquito control products have become popular in recent years to control the mosquito harm.

As shown in the patent documents with application numbers 201921978518.7, 201921721518.9, etc., it is common practice to provide an existing mosquito trapping device with various attractive elements involving an odor, a body odor, a sound, a color, a light, a temperature, humidity, and electric shock, so as to realize a remarkable mosquito trapping and control effect. Consequently, a structure is complex and a cost is extremely high. The most common and frequently-used light-attractive mosquito trapping and control devices are provided with mosquito attraction lamps or mosquito control lamps, while their structures are still complex. The following documents are seen as further relevant state of the art: WO 2014/077932 A1, WO 2019/221014 A1, US 2017/258068 A1, US 11 116 198 B2, CN 108 552 129 A.

### SUMMARY

An objective of the present disclosure is to provide a mosquito trapping device having a simple structure and a low cost, so as to solve at least one of the above problems.

In a first aspect, the present disclosure provides a mosquito trapping device. The device includes a body, a mosquito storage box, a fan, and a net cover assembly, where the net cover assembly is arranged on an upper end portion of the body and forms a first accommodation space with the body, and the mosquito storage box is mounted on the body; the net cover assembly includes a first net cover, a second net cover, and a third net cover, where the first net cover is mounted on the upper end portion of the body and provided with a first air outlet portion in communication with the first accommodation space, the second net cover sleeves a middle of the first net cover and is positioned at a periphery of the fan, the third net cover is mounted on the second net cover and positioned right above the fan, and the third net cover is provided with a first air inlet portion matching the fan; the mosquito storage box is provided with a second air inlet portion positioned right below the fan and a third air outlet portion in communication with the first accommodation space;
the first net cover is provided with a tank, and an upper end portion of the second net cover is positioned in the tank;
the first air outlet portion is arranged on a tank wall of the tank; and
when the fan works, air sequentially flows through the first air inlet portion and the second air inlet portion, so as to enter the mosquito storage box, and then sequentially flows through the third air outlet portion and the first accommodation space, so as to be blown out from the first air outlet portion, so that a first air duct is formed.

In this way, the present disclosure provides the mosquito trapping device in a novel structure. In the device, when the fan works, the air sequentially flows through the first air inlet portion and the second air inlet portion, so as to enter the mosquito storage box, and then sequentially flows through the third air outlet portion and the first accommodation space, so as to be blown out from the first air outlet portion, so that the first air duct is formed. Accordingly, mosquitoes around can be effectively trapped into the mosquito storage box through the air duct structure. The fan is the only power consuming component for mosquito trapping, and no other complex mosquito trapping and attracting facilities are used. An entire structure is simple, the cost is low, and a mosquito trapping function can be realized through the special structure design.

In addition, the first net cover is provided with the tank, so that an air outlet area can be expanded, and an air outletting force can be weakened. The first air outlet portion is arranged on the tank wall of the tank, so that an air outlet direction is perpendicular to an air inlet direction, and an air outlet surrounds a periphery of an air inlet. Accordingly, the air inlet will not be disturbed, and an attractant odor can be diffused, so that the attractant odor surrounds a periphery of the air inlet all the time.

In some embodiments, the second net cover is provided with a second air outlet portion in communication with the first accommodation space; and when the fan works, air sequentially flows through the first air inlet portion and the second air inlet portion, so as to enter the mosquito storage box, and then sequentially flows through the third air outlet portion and the first accommodation space, so as to be blown out from the second air outlet portion, so that a second air duct is formed.

In this way, when the fan works, the air sequentially flows through the first air inlet portion and the second air inlet portion, so as to enter the mosquito storage box, and then sequentially flows through the third air outlet portion and the first accommodation space, so as to be blown out from the first air outlet portion, so that the first air duct is formed; and the air sequentially flows through the first air inlet portion and the second air inlet portion, so as to enter the mosquito storage box, and then sequentially flows through the third air outlet portion and the first accommodation space, so as to be blown out from the second air outlet portion, so that the second air duct is formed. Accordingly, the device is formed into an air duct structure having one air inlet passage and two air outlet passages when the fan works. The mosquitoes around can be effectively trapped into the mosquito storage box through the air duct structure. The fan is the only power consuming component for mosquito trapping, and no other complex mosquito trapping and attracting facilities are used. The entire structure is simple, the cost is low, and the mosquito trapping function can be realized through the special structure design.

In some embodiments, the mosquito trapping device further includes a support and a support cover, where the support is mounted in the body and provided with a second accommodation space configured to accommodate the mosquito storage box; and the mosquito storage box is detachably mounted in the second accommodation space, the support cover is mounted above the support, and the fan is mounted above the support cover. In this way, the mosquito storage box is detachably arranged, so that the mosquitoes trapped in the box can be cleared in time, and repeated use can be realized.

In some embodiments, the support cover is provided with a first bulging portion extending upwards, and the first bulging portion is provided with an accommodation tank configured to accommodate the fan; and the second net cover is internally provided with a second bulging portion extending downwards, the second bulging portion is linked with the first bulging portion, and the second bulging portion is positioned on an inner side of the second air outlet portion. In this way, the first bulging portion and the second bulging portion can separate the air inlet passage from the air outlet passages. This structure also serves as a primary structure for forming the two air outlet passages.

In some embodiments, the mosquito trapping device further includes a backing plate, where the backing plate is mounted on the support cover and positioned right below the fan, the accommodation tank is delimited by the backing plate and the first bulging portion, and the backing plate is provided with a first through hole in communication with the accommodation tank. In this way, the backing plate plays a role of supporting the fan without affecting air inletting.

In some embodiments, the mosquito trapping device further includes an attractant accommodation portion, where the attractant accommodation portion is provided with an opening end, and the opening end is in communication with the tank. In this way, the attractant accommodation portion is configured to place the attractant, so as to enhance a mosquito attraction function.

**In** some embodiments, the mosquito trapping box includes a box body, a net-shaped member, a fixing member, and a cover body, where the net-shaped member is mounted on an inner wall of the box body through the fixing member, the cover body is mounted on an upper end portion of the box body, and an accommodation cavity is delimited by the net-shaped member, the cover body, and the box body jointly; and the second air inlet portion is arranged on the cover body, and the third air outlet portion is arranged on the box body and/or the net-shaped member.

The second air inlet portion includes a second through hole formed on the cover body, and the third air outlet portion includes a third through hole formed at a bottom of the box body and/or net holes formed on the net-shaped member.

The mosquito trapping box further includes a shielding portion configured to shield the second through hole, and the shielding portion includes a pair of shielding sheets rotatably mounted on the cover body;
when the fan does not work, the shielding sheets are attached to the cover body, so as to completely shield the second through hole, so that the second through hole is closed; and
when the fan works, the shielding sheets move away from the cover body under the action of air, so that the second through hole is opened.

In this way, the mosquito trapping box of the present disclosure has a simple structure, and can effectively ensure that the air ducts normally run while ensuring that the mosquitoes are effectively trapped in the box body.

In some embodiments, the mosquito trapping device further includes a control portion and a power supply portion; where the control portion includes a control panel mounted on the first net cover and a control circuit board arranged in the first accommodation space; and the power supply portion includes a power plug, and the power plug, the control panel, and the fan are connected to the control circuit board through wires.

The present disclosure has the beneficial effects as follows:
The present disclosure provides the mosquito trapping device in the novel structure. According to the device, the mosquitoes around can be effectively trapped into the mosquito storage box through the air duct structure. The fan is the only power consuming component for mosquito trapping, and no other complex mosquito trapping and attracting facilities are used. The entire structure is simple, the cost is low, and the mosquito trapping function can be realized through the special structure design.

The first net cover is provided with the tank, so that the air outlet area can be expanded, and the air outletting force can be weakened. The first air outlet portion is arranged on the tank wall of the tank, so that the air outlet direction is perpendicular to the air inlet direction, and the air outlet surrounds the periphery of the air inlet. Accordingly, the air inlet will not be disturbed, and the attractant odor can be diffused, so that the attractant odor surrounds the periphery of the air inlet all the time.

When the fan works, the air sequentially flows through the first air inlet portion and the second air inlet portion, so as to enter the mosquito storage box, and then sequentially flows through the third air outlet portion and the first accommodation space, so as to be blown out from the first air outlet portion, so that the first air duct is formed; and the air sequentially flows through the first air inlet portion and the second air inlet portion, so as to enter the mosquito storage box, and then sequentially flows through the third air outlet portion and the first accommodation space, so as to be blown out from the second air outlet portion, so that the second air duct is formed. Therefore, the device is formed into the air duct structure having one air inlet passage and two air outlet passages when the fan works.

### BRIEF DESCRIPTION OF THE DRAWINGS

FIG. 1 is a solid schematic structural diagram of a mosquito trapping device according to an embodiment of the present disclosure.
FIG. 2 is an exploded schematic structural diagram of the mosquito trapping device shown in FIG. 1.
FIG. 3 is a solid schematic structural diagram of a second net cover of the mosquito trapping device shown in FIG. 2.
FIG. 4 is a top-view schematic structural diagram of the mosquito trapping device shown in FIG. 1.
FIG. 5 is a sectional-view schematic structural diagram of the mosquito trapping device in direction A-A shown in FIG. 4.
FIG. 6 is a solid schematic structural diagram of a mosquito storage box of the mosquito trapping device shown in FIG. 2.
FIG. 7 is an exploded schematic structural diagram of the mosquito storage box shown in FIG. 6.

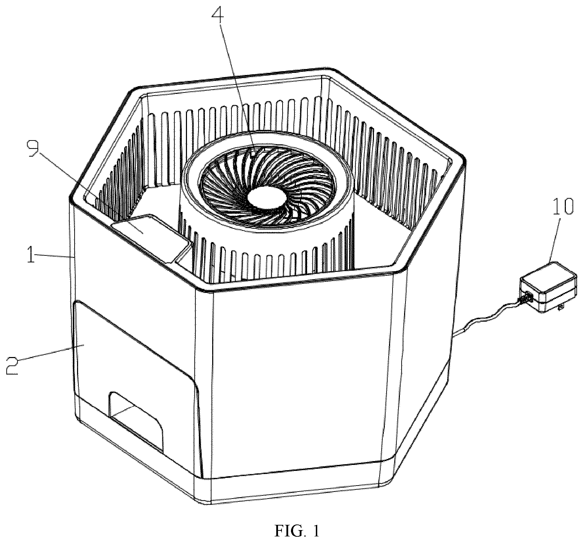

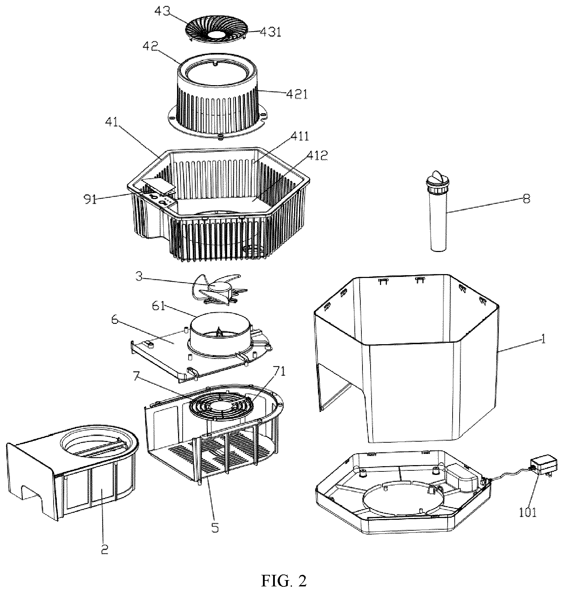

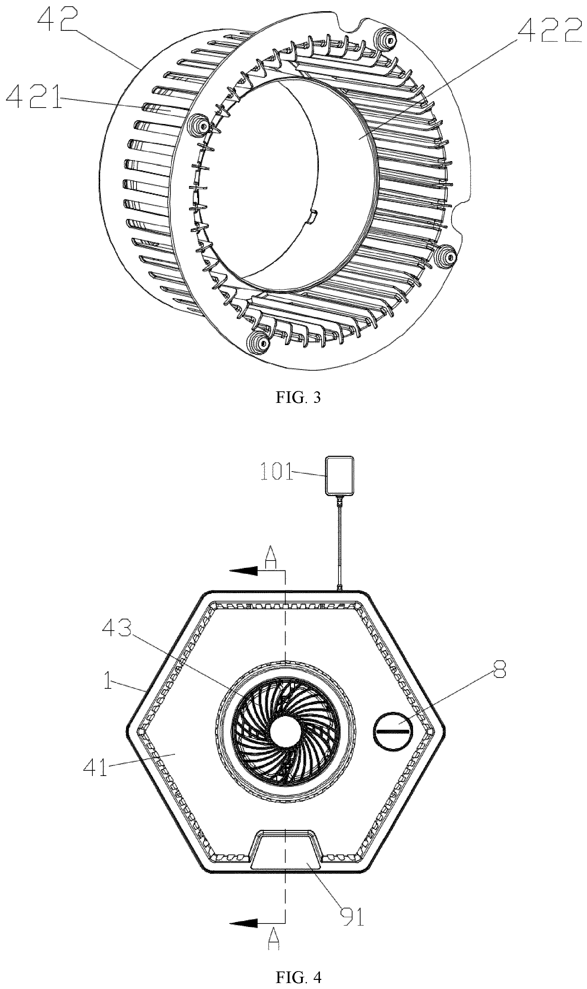

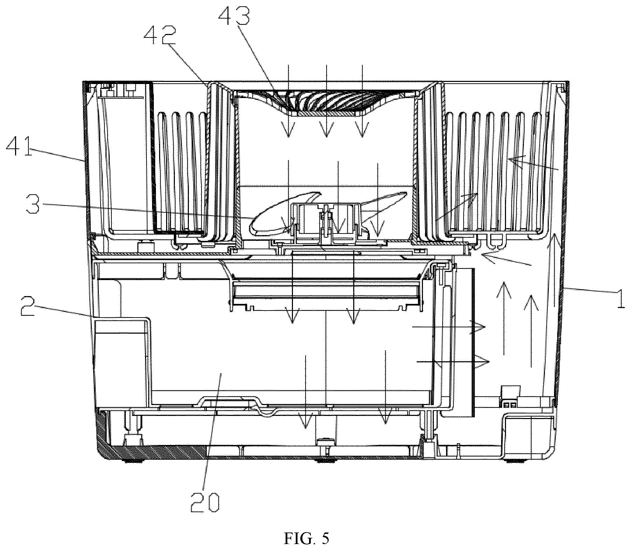

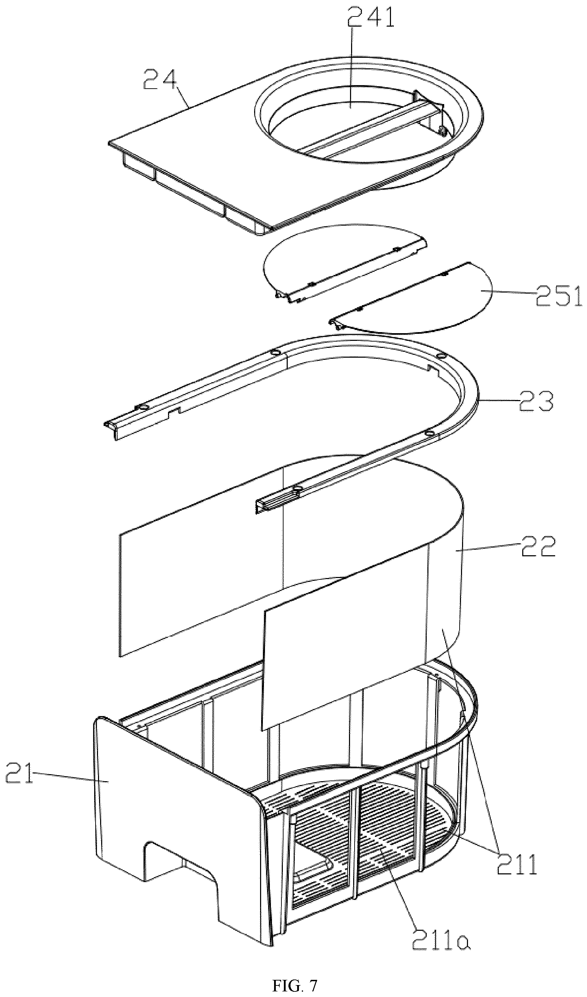

Reference numerals in FIGs. 1-7: 1-body; 2-mosquito storage box; 3-fan; 4-net cover assembly; 5-support; 6-support cover; 7-backing plate; 8-attractant accommodation portion; 9-control portion; 10-power supply portion; 11-first accommodation space; 20-accommodation cavity; 21-box body; 22-net-shaped member; 23-fixing member; 24-cover body; 25-shielding portion; 41-first net cover; 42-second net cover; 43-third net cover; 50-second accommodation space; 61-first bulging portion; 71-first through hole; 81-opening end; 91-control panel; 101-power plug; 211-third air outlet portion; 241-second air inlet portion; 251-shielding sheet; 411-first air outlet portion; 412-tank; 421-second air outlet portion; 422-second bulging portion; 431-first air inlet portion; 611-accommodation tank; and 211a-third through hole.

### DETAILED DESCRIPTION OF EMBODIMENTS

The present disclosure will be further described in detail below with reference to the accompanying drawings and specific examples.

### Example 1

FIGs. 1-7 illustratively shows a mosquito trapping device according to an embodiment of the present disclosure.

As shown in Figs 1-7, the mosquito trapping device includes a body 1, a mosquito storage box 2, a fan 3, and a net cover assembly 4, where the net cover assembly 4 is arranged on an upper end portion of the body 1 and forms a first accommodation space 11 with the body 1, and the mosquito storage box 2 is mounted on the body 1; the net cover assembly 4 includes a first net cover 41, a second net cover 42, and a third net cover 43, where the first net cover 41 is mounted on the upper end portion of the body 1 and provided with a first air outlet portion 411 in communication with the first accommodation space 11, the second net cover 42 sleeves a middle of the first net cover 41 and is positioned at a periphery of the fan 3, the second net cover 42 is provided with a second air outlet portion 421 in communication with the first accommodation space 11, the third net cover 43 is mounted on the second net cover 42 and positioned right above the fan 3, and the third net cover 43 is provided with a first air inlet portion 431 matching the fan 3; and the mosquito storage box 2 is provided with a second air inlet portion 241 positioned right below the fan 3 and a third air outlet portion 211 in communication with the first accommodation space 11.

In the present embodiment, the first air outlet portion 411, the second air outlet portion 421, the first air inlet portion 431, etc. may be holes in various shapes through which air can pass.

The mosquito trapping device further includes a support 5 and a support cover 6, where the support 5 is mounted in the body 1 and provided with a second accommodation space 50 configured to accommodate the mosquito storage box 2; and the mosquito storage box 2 is detachably mounted in the second accommodation space 50, the support cover 6 is mounted above the support 5, and the fan 3 is mounted above the support cover 6. In this way, the mosquito storage box 2 is detachably arranged, so that mosquitoes trapped in the box can be cleared in time, and repeated use can be realized.

The support cover 6 is provided with a first bulging portion 61 extending upwards, and the first bulging portion 61 is provided with an accommodation tank 611 configured to accommodate the fan 3; and the second net cover 42 is internally provided with a second bulging portion 422 extending downwards, the second bulging portion 422 is linked with the first bulging portion 61, and the second bulging portion 422 is positioned on an inner side of the second air outlet portion 421. In this way, the first bulging portion 61 and the second bulging portion 422 can separate an air inlet passage from air outlet passages. This structure also serves as a primary structure for forming two air outlet passages.

The mosquito trapping device further includes a backing plate 7, where the backing plate 7 is mounted on the support cover 6 and positioned right below the fan 3, the accommodation tank 611 is delimited by the backing plate 7 and the first bulging portion 61, and the backing plate 7 is provided with a first through hole 71 in communication with the accommodation tank 611. In this way, the backing plate 7 plays a role of supporting the fan 3 without affecting air inletting.

The first net cover 41 is provided with a tank 412, so that an air outlet area can be expanded, and an air outletting force can be weakened. The first air outlet portion 411 is arranged on a tank wall of the tank 412, so that an air outlet direction is perpendicular to an air inlet direction, and an air outlet of the first air outlet portion 411 surrounds a periphery of an air inlet. Accordingly, the air inlet will not be disturbed, and an attractant odor can be diffused, so that the attractant odor surrounds a periphery of the air inlet all the time.

When the fan 3 works, air sequentially flows through the first air inlet portion 431 and the second air inlet portion 241, so as to enter the mosquito storage box 2, and then sequentially flows through the third air outlet portion 211 and the first accommodation space 11, so as to be blown out from the first air outlet portion 411, so that a first air duct is formed; and moreover, air sequentially flows through the first air inlet portion 431 and the second air inlet portion 241, so as to enter the mosquito storage box 2, and then sequentially flows through the third air outlet portion 211 and the first accommodation space 11, so as to be blown out from the second air outlet portion 421, so that a second air duct is formed. Therefore, the device is formed into an air duct structure having one air inlet passage and two air outlet passages when the fan works.

The mosquito trapping device further includes an attractant accommodation portion 8, where the attractant accommodation portion 8 is provided with an opening end 81, and the opening end 81 is in communication with the tank 412. In this way, the attractant accommodation portion 8 is configured to place the attractant, so as to enhance a mosquito attraction function.

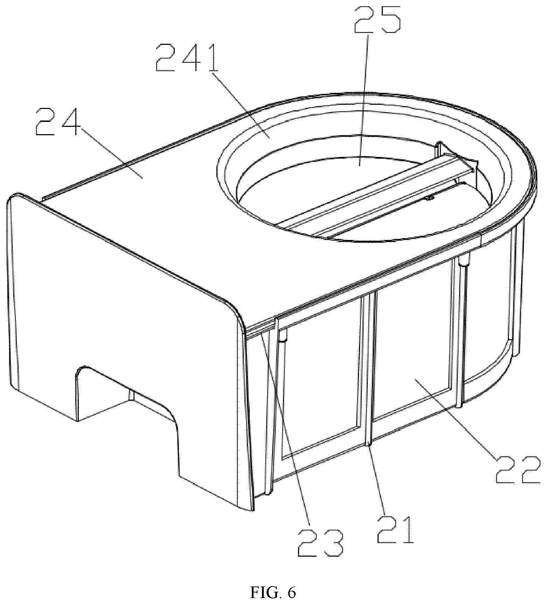

As shown in FIGs. 6-7, in the present embodiment, the mosquito trapping box includes a box body 21, a net-shaped member 22, a fixing member 23, and a cover body 24, where the net-shaped member 22 is mounted on an inner wall of the box body 21 through the fixing member 23, the cover body 24 is mounted on an upper end portion of the box body 21, and an accommodation cavity 20 is delimited by the net-shaped member 22, the cover body 24, and the box body 21 jointly; and the second air inlet portion 241 is arranged on the cover body 24, and the third air outlet portion 211 is arranged on the box body 21 and/or the net-shaped member 22. In the present embodiment, the net-shaped member 22 is a dense net through which air instead of the mosquitoes can pass.

The second air inlet portion 241 includes a second through hole formed on the cover body 24, and the third air outlet portion 211 includes a third through hole 211a formed at a bottom of the box body 21 and/or net holes formed on the net-shaped member 22. The third air outlet portion 211 may be the third through hole 211a separately provided at the bottom of the box body 21 or the net holes separately provided on the net-shaped member 22, or may be of an air outlet structure combining the third through hole 211a and the net holes. In the present embodiment, the third air outlet portion 211 is of the air outlet structure combining the third through hole 211a and the net holes.

The mosquito trapping box further includes a shielding portion 25 configured to shield the second through hole, and the shielding portion 25 includes a pair of shielding sheets 251 rotatably mounted on the cover body 24 through a rotary shaft. Torsional springs may also be arranged to automatically restore the shielding sheets 251.

When the fan 3 does not work, the shielding sheets 251 are attached to the cover body 24, so as to completely shield the second through hole, so that the second through hole is closed; and

When the fan 3 works, the shielding sheets 251 move away from the cover body 24 under the action of air, so that the second through hole is opened.

In this way, the mosquito trapping box of the present disclosure has a simple structure, and can effectively ensure that the air ducts normally run while ensuring that the mosquitoes are effectively trapped in the box body 21.

The mosquito trapping device further includes a control portion 9 and a power supply portion 10; where the control portion 9 includes a control panel 91 mounted on the first net cover 41 and a control circuit board arranged in the first accommodation space 11; and the power supply portion 10 includes a power plug 101, and the power plug 101, the control panel 91, and the fan 3 are connected to the control circuit board through wires.

Preferably, the sum of an air outlet volume of the first air outlet portion 411 on the first net cover 41 and an air outlet volume of the second air outlet portion 421 on the second net cover 42 is six times or more an air inlet volume of the first air inlet portion 431 of the third net cover 43. In this way, it can be effectively ensured that the air outletting force is smaller than an air inletting force.

Preferably, in the present embodiment, the body 1, the mosquito storage box 2, the fan 3, the net cover assembly 4, the attractant accommodation portion 8, the control panel 91 of the control portion 9, and the power plug 101 of the power supply portion 10 have dark (such as black) appearances. In this way, the dark appearance can enhance the mosquito attracting effect.

The present disclosure provides the mosquito trapping device in a novel structure. According to the device, the air duct structure having one air inlet passage and two air outlet passages is formed through the fan 3. Therefore, the mosquitoes around can be effectively trapped into the mosquito storage box 2 through the air duct structure. The fan 3 is the only power consuming component for mosquito trapping, and no other complex mosquito trapping and attracting facilities are used. An entire structure is simple, a cost is low, and a mosquito trapping function can be realized through the special structure design.

### Example 2

The mosquito trapping device in the present embodiment has basically the same structure as that in Embodiment 1. The difference lies in that no second air outlet portion 421 is provided on an outer wall of a second net cover 42.

An air outlet volume of a first air outlet portion 411 on a first net cover 41 is six times or more an air inlet volume of a first air inlet portion 431 on a third net cover 43.

## Claims

1. A mosquito trapping device, **characterized by** comprising a body (1), a mosquito storage box (2), a fan (3), and a net cover assembly (4), wherein the net cover assembly (4) is arranged on an upper end portion of the body (1) and forms a first accommodation space (11) with the body (1), and the mosquito storage box (2) is mounted on the body (1); the net cover assembly (4) comprises a first net cover (41), a second net cover (42), and a third net cover (43), wherein the first net cover (41) is mounted on the upper end portion of the body (1) and provided with a first air outlet portion (411) in communication with the first accommodation space (11), the second net cover (42) sleeves a middle of the first net cover (41) and is positioned at a periphery of the fan (3), the third net cover (43) is mounted on the second net cover (42) and positioned right above the fan (3), and the third net cover (43) is provided with a first air inlet portion (431) matching the fan (3); the mosquito storage box (2) is provided with a second air inlet portion (241) positioned right below the fan (3) and a third air outlet portion (211) in communication with the first accommodation space (11);
the first net cover (41) is provided with a tank (412), and an upper end portion of the second net cover (42) is positioned in the tank (412);
the first air outlet portion (411) is arranged on a tank wall of the tank (412); and
when the fan (3) works, air sequentially flows through the first air inlet portion (431) and the second air inlet portion (241), so as to enter the mosquito storage box (2), and then sequentially flows through the third air outlet portion (211) and the first accommodation space (11), so as to be blown out from the first air outlet portion (411), so that a first air duct is formed.

2. The mosquito trapping device according to claim 1, **characterized in that** the second net cover (42) is provided with a second air outlet portion (421) in communication with the first accommodation space (11);
when the fan (3) works, air sequentially flows through the first air inlet portion (431) and the second air inlet portion (241), so as to enter the mosquito storage box (2), and then sequentially flows through the third air outlet portion (211) and the first accommodation space (11), so as to be blown out from the second air outlet portion (421), so that a second air duct is formed;
an air outlet volume of the first air outlet portion (411) is six times or more an air inlet volume of the first air inlet portion (431); and alternatively,
the sum of an air outlet volume of the first air outlet portion (411) and an air outlet volume of the second air outlet portion (421) is six times or more an air inlet volume of the first air inlet portion (431).

3. The mosquito trapping device according to claim 2, **characterized by** further comprising a support (5) and a support cover (6), wherein the support (5) is mounted in the body (1) and provided with a second accommodation space (50) configured to accommodate the mosquito storage box (2); and the mosquito storage box (2) is detachably mounted in the second accommodation space (50), the support cover (6) is mounted above the support (5), and the fan (3) is mounted above the support cover (6).

4. The mosquito trapping device according to claim 3, **characterized in that** the support cover (6) is provided with a first bulging portion (61) extending upwards, and the first bulging portion (61) is provided with an accommodation tank (611) configured to accommodate the fan (3); and the second net cover (42) is internally provided with a second bulging portion (422) extending downwards, the second bulging portion (422) is linked with the first bulging portion (61), and the second bulging portion (422) is positioned on an inner side of the second air outlet portion (421).

5. The mosquito trapping device according to claim 4, **characterized by** further comprising a backing plate (7), wherein the backing plate (7) is mounted on the support cover (6) and positioned right below the fan (3), the accommodation tank (611) is delimited by the backing plate (7) and the first bulging portion (61), and the backing plate (7) is provided with a first through hole (71) in communication with the accommodation tank (611).

6. The mosquito trapping device according to any one of claims 1-5, **characterized by** further comprising an attractant accommodation portion (8), wherein the attractant accommodation portion (8) is provided with an opening end (81), and the opening end (81) is in communication with the tank (412); and
appearances of the body (1), the mosquito storage box (2), the fan (3), the net cover assembly (4), and the attractant accommodation portion (8) are made of dark materials.

7. The mosquito trapping device according to any one of claims 1-5, **characterized in that** the mosquito trapping box comprises a box body (21), a net-shaped member (22), a fixing member (23), and a cover body (24), the net-shaped member (22) is mounted on an inner wall of the box body (21) through the fixing member (23), the cover body (24) is mounted on an upper end portion of the box body (21), and an accommodation cavity (20) is delimited by the net-shaped member (22), the cover body (24), and the box body (21) jointly; and the second air inlet portion (241) is arranged on the cover body (24), and the third air outlet portion (211) is arranged on the box body (21) and/or the net-shaped member (22).

8. The mosquito trapping device according to claim 7, **characterized in that** the second air inlet portion (241) comprises a second through hole formed on the cover body (24), and the third air outlet portion (211) comprises a third through hole (211a) formed at a bottom of the box body (21) and/or net holes formed on the net-shaped member (22).

9. The mosquito trapping device according to claim 8, **characterized in that** the mosquito trapping box further comprises a shielding portion (25) configured to shield the second through hole, and the shielding portion (25) comprises a pair of shielding sheets (251) rotatably mounted on the cover body (24);
when the fan (3) does not work, the shielding sheets (251) are attached to the cover body (24), so as to completely shield the second through hole, so that the second through hole is closed; and
when the fan (3) works, the shielding sheets (251) move away from the cover body (24) under the action of air, so that the second through hole is opened.

10. The mosquito trapping device according to any one of claims 1-5, **characterized by** further comprising a control portion (9) and a power supply portion (10); wherein the control portion (9) comprises a control panel (91) mounted on the first net cover (41) and a control circuit board arranged in the first accommodation space (11); and the power supply portion (10) comprises a power plug (101), and the power plug (101), the control panel (91), and the fan (3) are connected to the control circuit board through wires.

## Patentansprüche

1. Mückenfangvorrichtung, **dadurch gekennzeichnet, dass** sie einen Körper (1), einen Mückenaufbewahrungskasten (2), ein Gebläse (3) und eine Netzabdeckungsanordnung (4) umfasst, wobei die Netzabdeckungsanordnung (4) auf einem oberen Endabschnitt des Körpers (1) angeordnet ist und einen ersten Aufnahmeraum (11) mit dem Körper (1) bildet und der Mückenaufbewahrungskasten (2) auf dem Körper (1) montiert ist, die Netzabdeckungsanordnung (4) eine erste Netzabdeckung (41), eine zweite Netzabdeckung (42) und eine dritte Netzabdeckung (43) umfasst, wobei die erste Netzabdeckung (41) auf dem oberen Endabschnitt des Körpers (1) montiert und mit einem ersten Luftauslassabschnitt (411) in Kommunikation mit dem ersten Aufnahmeraum (11) versehen ist, die zweite Netzabdeckung (42) eine Mitte der ersten Netzabdeckung (41) ummantelt und an einem Umfang des Gebläses (3) positioniert ist, die dritte Netzabdeckung (43) auf der zweiten Netzabdeckung (42) montiert und genau oberhalb des Gebläses (3) positioniert ist und die dritte Netzabdeckung (43) mit einem ersten Lufteinlassabschnitt (431) versehen ist, der passend zum Gebläse (3) ausgebildet ist, wobei der Mückenaufbewahrungskasten (2) mit einem zweiten Lufteinlassabschnitt (241) versehen ist, der genau unterhalb des Gebläses (3) positioniert ist, und einem dritten Luftauslassabschnitt (211) in Kommunikation mit dem ersten Aufnahmeraum (11),
wobei die erste Netzabdeckung (41) mit einem Behälter (412) versehen ist und ein oberer Endabschnitt der zweiten Netzabdeckung (42) in dem Behälter (412) positioniert ist,
wobei der erste Luftauslassabschnitt (411) auf einer Behälterwand des Behälters (412) angeordnet ist und,
wenn das Gebläse (3) arbeitet, der Reihe nach Luft durch den ersten Lufteinlassabschnitt (431) und den zweiten Lufteinlassabschnitt (241) strömt, sodass sie in den Mückenaufbewahrungskasten (2) einströmt, und dann der Reihe nach durch den dritten Luftauslassabschnitt (211) und den ersten Aufnahmeraum (11) strömt, sodass sie aus dem ersten Luftauslassabschnitt (411) ausgeblasen wird, sodass eine erste Luftleitung gebildet wird.

2. Mückenfangvorrichtung nach Anspruch 1, **dadurch gekennzeichnet, dass** die zweite Netzabdeckung (42) mit einem zweiten Luftauslassabschnitt (421) in Kommunikation mit dem ersten Aufnahmeraum (11) versehen ist,
wobei, wenn das Gebläse (3) arbeitet, der Reihe nach Luft durch den ersten Lufteinlassabschnitt (431) und den zweiten Lufteinlassabschnitt (241) strömt, sodass sie in den Mückenaufbewahrungskasten (2) einströmt, und dann der Reihe nach durch den dritten Luftauslassabschnitt (211) und den ersten Aufnahmeraum (11) strömt, sodass sie aus dem zweiten Luftauslassabschnitt (421) ausgeblasen wird, sodass eine zweite Luftleitung gebildet wird,
wobei ein Luftauslassvolumen des ersten Luftauslassabschnitts (411) das Sechsfache oder mehr eines Lufteinlassvolumens des ersten Lufteinlassabschnitts (431) beträgt und alternativ
die Summe eines Luftauslassvolumens des ersten Luftauslassabschnitts (411) und eines Luftauslassvolumens des zweiten Luftauslassabschnitts (421) das Sechsfache oder mehr eines Lufteinlassvolumens des ersten Lufteinlassabschnitts (431) beträgt.

3. Mückenfangvorrichtung nach Anspruch 2, **dadurch gekennzeichnet, dass** sie ferner eine Halterung (5) und eine Halterungsabdeckung (6) umfasst, wobei die Halterung (5) in dem Körper (1) montiert und mit einem zweiten Aufnahmeraum (50) versehen ist, der ausgelegt ist, um den Mückenaufbewahrungskasten (2) aufzunehmen, und der Mückenaufbewahrungskasten (2) abnehmbar in dem zweiten Aufnahmeraum (50) montiert ist, die Halterungsabdeckung (6) oberhalb der Halterung (5) montiert ist und das Gebläse (3) oberhalb der Halterungsabdeckung (6) montiert ist.

4. Mückenfangvorrichtung nach Anspruch 3, **dadurch gekennzeichnet, dass** die Halterungsabdeckung (6) mit einem ersten sich wölbenden Abschnitt (61) versehen ist, der sich nach oben erstreckt, und der erste sich wölbende Abschnitt (61) mit einem Aufnahmebehälter (611) versehen ist, der ausgelegt ist, um das Gebläse (3) aufzunehmen, und die zweite Netzabdeckung (42) innenseitig mit einem zweiten sich wölbenden Abschnitt (422) versehen ist, der sich nach unten erstreckt, der zweite sich wölbende Abschnitt (422) mit dem ersten sich wölbenden Abschnitt (61) verknüpft ist und der zweite sich wölbende Abschnitt (422) auf einer inneren Seite des zweiten Luftauslassabschnitts (421) positioniert ist.

5. Mückenfangvorrichtung nach Anspruch 4, **dadurch gekennzeichnet, dass** sie ferner eine Stützplatte (7) umfasst, wobei die Stützplatte (7) auf der Halterungsabdeckung (6) montiert und genau unterhalb des Gebläses (3) positioniert ist, der Aufnahmebehälter (611) durch die Stützplatte (7) und den ersten sich wölbenden Abschnitt (61) begrenzt ist und die Stützplatte (7) mit einem ersten Durchgangsloch (71) in Kommunikation mit dem Aufnahmebehälter (611) versehen ist.

6. Mückenfangvorrichtung nach einem der Ansprüche 1-5, **dadurch gekennzeichnet, dass** sie ferner einen Lockstoffaufnahmeabschnitt (8) umfasst, wobei der Lockstoffaufnahmeabschnitt (8) mit einem Öffnungsende (81) versehen ist und das Öffnungsende (81) mit dem Behälter (412) in Kommunikation ist und
das Erscheinungsbild des Körpers (1), des Mückenaufbewahrungskastens (2), des Gebläses (3), der Netzabdeckungsanordnung (4) und des Lockstoffaufnahmeabschnitts (8) aus dunklen Materialien besteht.

7. Mückenfangvorrichtung nach einem der Ansprüche 1-5, **dadurch gekennzeichnet, dass** der Mückenfangkasten einen Kastenkörper (21), ein netzförmiges Element (22), ein Fixierelement (23) und einen Abdeckungskörper (24) umfasst, wobei das netzförmige Element (22) durch das Fixierelement (23) auf einer inneren Wand des Kastenkörpers (21) montiert ist, der Abdeckungskörper (24) auf einem oberen Endabschnitt des Kastenkörpers (21) montiert ist und ein Aufnahmehohlraum (20) gemeinsam durch das netzförmige Element (22), den Abdeckungskörper (24) und den Kastenkörper (21) begrenzt ist und der zweite Lufteinlassabschnitt (241) auf dem Abdeckungskörper (24) angeordnet ist und der dritte Luftauslassabschnitt (211) auf dem Kastenkörper (21) und/oder dem netzförmigen Element (22) angeordnet ist.

8. Mückenfangvorrichtung nach Anspruch 7, **dadurch gekennzeichnet, dass** der zweite Lufteinlassabschnitt (241) ein zweites Durchgangsloch umfasst, das auf dem Abdeckungskörper (24) ausgebildet ist, und der dritte Luftauslassabschnitt (211) ein drittes Durchgangsloch (211a) umfasst, das an einer Unterseite des Kastenkörpers (21) ausgebildet ist, und/oder Netzlöcher, die auf dem netzförmigen Element (22) ausgebildet sind.

9. Mückenfangvorrichtung nach Anspruch 8, **dadurch gekennzeichnet, dass** der Mückenfangkasten ferner einen Abschirmungsabschnitt (25) umfasst, der ausgelegt ist, um das zweite Durchgangsloch abzuschirmen, und der Abschirmungsabschnitt (25) ein Paar von Abschirmungsblechen (251) umfasst, die drehbar auf dem Abdeckungskörper (24) montiert sind,
wobei die Abschirmungsbleche (251), wenn das Gebläse (3) nicht arbeitet, an dem Abdeckungskörper (24) befestigt sind, um das zweite Durchgangsloch vollständig abzuschirmen, sodass das zweite Durchgangsloch geschlossen ist, und
sich die Abschirmungsbleche (251), wenn das Gebläse (3) arbeitet, unter der Einwirkung von Luft wegführend von dem Abdeckungskörper (24) bewegen, sodass das zweite Durchgangsloch geöffnet wird.

10. Mückenfangvorrichtung nach einem der Ansprüche 1-5, **dadurch gekennzeichnet, dass** sie ferner einen Bedienabschnitt (9) und einen Stromversorgungsabschnitt (10) umfasst, wobei der Bedienabschnitt (9) ein Bedienfeld (91) umfasst, das auf der ersten Netzabdeckung (41) montiert ist, und eine Steuerplatine, die in dem ersten Aufnahmeraum (11) angeordnet ist, und der Stromversorgungsabschnitt (10) einen Stromanschluss (101) umfasst und der Stromanschluss (101), das Bedienfeld (91) und das Gebläse (3) durch Drähte mit der Steuerplatine verbunden sind.

## Revendications

1. Dispositif de piégeage de moustiques, **caractérisé en ce qu'**il comprend un corps (1), une boîte de stockage de moustiques (2), un ventilateur (3) et un ensemble couvercle filet (4), dans lequel l'ensemble couvercle filet (4) est disposé sur une partie d'extrémité supérieure du corps (1) et forme un premier espace de logement (11) avec le corps (1), et la boîte de stockage de moustiques (2) est montée sur le corps (1) ; l'ensemble couvercle filet (4) comprend un premier couvercle filet (41), un deuxième couvercle filet (42) et un troisième couvercle filet (43), dans lequel le premier couvercle filet (41) est monté sur la partie d'extrémité supérieure du corps (1) et pourvu d'une première partie de sortie d'air (411) en communication avec le premier espace de logement (11), le deuxième couvercle filet (42) entoure un milieu du premier couvercle filet (41) et est positionné au niveau d'une périphérie du ventilateur (3), le troisième couvercle filet (43) est monté sur le deuxième couvercle filet (42) et positionné juste au-dessus du ventilateur (3), et le troisième couvercle filet (43) est pourvu d'une première partie d'entrée d'air (431) correspondant au ventilateur (3) ; la boîte de stockage de moustiques (2) est pourvue d'une deuxième partie d'entrée d'air (241) positionnée juste au-dessous du ventilateur (3) et d'une troisième partie de sortie d'air (211) en communication avec le premier espace de logement (11) ;
le premier couvercle filet (41) est pourvu d'un réservoir (412), et une partie d'extrémité supérieure du deuxième couvercle filet (42) est positionnée dans le réservoir (412) ;
la première partie de sortie d'air (411) est disposée sur une paroi de réservoir du réservoir (412) ; et
lorsque le ventilateur (3) est en fonctionnement, l'air s'écoule de manière séquentielle à travers la première partie d'entrée d'air (431) et la deuxième partie d'entrée d'air (241), de manière à entrer dans la boîte de stockage de moustiques (2), puis s'écoule de manière séquentielle à travers la troisième partie de sortie d'air (211) et le premier espace de logement (11), de manière à être soufflé hors de la première partie de sortie d'air (411), de sorte qu'un premier conduit d'air est formé.

2. Dispositif de piégeage de moustiques selon la revendication 1, **caractérisé en ce que** le deuxième couvercle filet (42) est pourvu d'une deuxième partie de sortie d'air (421) en communication avec le premier espace de logement (11) ;
lorsque le ventilateur (3) est en fonctionnement, l'air s'écoule de manière séquentielle à travers la première partie d'entrée d'air (431) et la deuxième partie d'entrée d'air (241), de manière à entrer dans la boîte de stockage de moustiques (2), puis s'écoule de manière séquentielle à travers la troisième partie de sortie d'air (211) et le premier espace de logement (11), de manière à être soufflé hors de la deuxième partie de sortie d'air (421), de sorte qu'un deuxième conduit d'air est formé ;
un volume de sortie d'air de la première partie de sortie d'air (411) est au moins six fois supérieur à un volume d'entrée d'air de la première partie d'entrée d'air (431) ; et en variante,
la somme d'un volume de sortie d'air de la première partie de sortie d'air (411) et d'un volume de sortie d'air de la deuxième partie de sortie d'air (421) est au moins six fois supérieure à un volume d'entrée d'air de la première partie d'entrée d'air (431).

3. Dispositif de piégeage de moustiques selon la revendication 2, **caractérisé en ce qu'**il comprend en outre un support (5) et un couvercle de support (6), dans lequel le support (5) est monté dans le corps (1) et pourvu d'un deuxième espace de logement (50) configuré pour abriter la boîte de stockage de moustiques (2) ; et la boîte de stockage de moustiques (2) est montée de manière amovible dans le deuxième espace de logement (50), le couvercle de support (6) est monté au-dessus du support (5), et le ventilateur (3) est monté au-dessus du couvercle de support (6).

4. Dispositif de piégeage de moustiques selon la revendication 3, **caractérisé en ce que** le couvercle de support (6) est pourvu d'une première partie de renflement (61) s'étendant vers le haut, et la première partie de renflement (61) est pourvue d'un réservoir de logement (611) configuré pour abriter le ventilateur (3) ; et le deuxième couvercle filet (42) est pourvu d'une deuxième partie de renflement (422) à l'intérieur s'étendant vers le bas, la deuxième partie de renflement (422) est reliée à la première partie de renflement (61), et la deuxième partie de renflement (422) est positionnée sur un côté interne de la deuxième partie de sortie d'air (421).

5. Dispositif de piégeage de moustiques selon la revendication 4, **caractérisé en ce qu'**il comprend en outre une plaque d'appui (7), dans lequel la plaque d'appui (7) est montée sur le couvercle de support (6) et positionnée juste au-dessous du ventilateur (3), le réservoir de logement (611) est délimité par la plaque d'appui (7) et la première partie de renflement (61), et la plaque d'appui (7) est pourvue d'un premier trou traversant (71) en communication avec le réservoir de logement (611).

6. Dispositif de piégeage de moustiques selon l'une quelconque des revendications 1-5, **caractérisé en ce qu'**il comprend en outre une partie de logement d'attractant (8), dans lequel la partie de logement d'attractant (8) est pourvue d'une extrémité d'ouverture (81), et l'extrémité d'ouverture (81) est en communication avec le réservoir (412) ; et
des parties visibles du corps (1), de la boîte de stockage de moustiques (2), du ventilateur (3), de l'ensemble couvercle filet (4) et de la partie de logement d'attractant (8) sont constitués de matériaux sombres.

7. Dispositif de piégeage de moustiques selon l'une quelconque des revendications 1-5, **caractérisé en ce que** la boîte de piégeage de moustiques comprend un corps de boîte (21), un organe en forme de filet (22), un organe de fixation (23), et un corps de couvercle (24), l'organe en forme de filet (22) est monté sur une paroi interne du corps de boîte (21) à travers l'organe de fixation (23), le corps de couvercle (24) est monté sur une partie d'extrémité supérieure du corps de boîte (21), et une cavité de logement (20) est délimitée par l'organe en forme de filet (22), le corps de couvercle (24) et le corps de boîte (21) ensemble ; et la deuxième partie d'entrée d'air (241) est disposée sur le corps de couvercle (24), et la troisième partie de sortie d'air (211) est disposée sur le corps de boîte (21) et/ou l'organe en forme de filet (22).

8. Dispositif de piégeage de moustiques selon la revendication 7, **caractérisé en ce que** la deuxième partie d'entrée d'air (241) comprend un deuxième trou traversant formé sur le corps de couvercle (24), et la troisième partie de sortie d'air (211) comprend un troisième trou traversant (211a) formé au fond du corps de boîte (21) et/ou des trous de filet formés sur l'organe en forme de filet (22).

9. Dispositif de piégeage de moustiques selon la revendication 8, **caractérisé en ce que** la boîte de piégeage de moustiques comprend en outre une partie de couverture (25) configurée pour couvrir le deuxième trou traversant, et la partie de couverture (25) comprend une paire de feuilles de couverture (251) montées de manière rotative sur le corps de couvercle (24) ;
lorsque le ventilateur (3) n'est pas en fonctionnement, les feuilles de couverture (251) sont attachées au corps de couvercle (24), de manière à couvrir complètement le deuxième trou traversant, de sorte que le deuxième trou traversant est fermé ; et
lorsque le ventilateur (3) est en fonctionnement, les feuilles de couverture (251) s'éloignent du corps de couvercle (24) sous l'action de l'air, de sorte que le deuxième trou traversant est ouvert.

10. Dispositif de piégeage de moustiques selon l'une quelconque des revendications 1-5, **caractérisé en ce qu'**il comprend en outre une partie de commande (9) et une partie d'alimentation électrique (10) ; dans lequel la partie de commande (9) comprend un panneau de commande (91) monté sur le premier couvercle filet (41) et une carte de circuit de commande disposée dans le premier espace de logement (11) ; et la partie d'alimentation électrique (10) comprend une fiche d'alimentation (101), et la fiche d'alimentation (101), le panneau de commande (91) et le ventilateur (3) sont reliés à la carte de circuit de commande à travers des fils.
